# EUROPEAN PATENT APPLICATION

(11) **EP 1 258 850 A2**
(43) Date of publication of application: **20.11.2002**
(21) Application number: 02010179.6
(22) Date of filing: 14.05.2002
(51) Int. Cl.: G08G 1/042

(54) **Reflection multiplier radio wave marker system and traffic system**

(30) Priority: 14.05.2001 JP 2001142775
(71) Applicant: MATSUSHITA ELECTRIC INDUSTRIAL CO., LTD., Kadoma-shi, Osaka 571-8501 (JP)
(72) Inventor: Tanji, Yoshihiko, Toyono-gun, Osaka 563-0104 (JP); Handa, Satoru, Ikoma-shi, Nara 630-0121 (JP); Nakatsuka, Akira, Kanagawa 224-0054 (JP)
(74) Representative: Balsters, Robert

(57) **Abstract**

A reflection multiplier radio wave marker, the transmit antenna of which is comprised of a coil either one of two types, wound clockwise or anti-clockwise, so that the transmit electric wave can be reversed in phase by approximately 180°. A marker system and a traffic system using the marker are also disclosed in the present invention.

## Description

### FIELD OF THE INVENTION

The present invention relates to a radio wave type lane marker installed in the surface of a road for providing a cruising vehicle with information about position of the vehicle in terms of width direction of the lane as well as information about the road, a marker sensor, a marker system and a traffic system using these devices.

### BACKGROUND OF THE INVENTION

Conventionally known marker systems and traffic systems for providing a vehicle with position information in the width direction of a lane, as well as road information, include a magnetic marker system using a magnet device and those disclosed in Japanese Patent Publication of Unexamined Applications No.JP H11-339193, which is teaching an electric wave type lane marker, a lane marker sensor for detecting the marker and a traffic system using these devices.

In the magnetic marker system, a vehicle detects a magnet device (magnetic marker) installed in the road surface and learns intensity and direction of the magnetic field to obtain position information in the width direction of a lane. It is also proposed to provide a certain information about the road through a binary-coding of the two values, N and S, of a magnetic pole.

Conventional radio wave marker is installed in the road surface to reflect radio wave transmitted from a vehicle. The vehicle receives reflected wave, and learns position in the width direction of a lane by the intensity value of electric field detected.

Besides, there are number of systems proposed; which include, a system for providing road information by transmitting time-sequentially a plurality of electric waves having different frequencies to be detected respectively in the resonance reflection waves, a marker system using an information tag containing an IC for providing road information and a traffic system based thereon.

Systems utilizing a beacon or the like wireless communication devices and optical communication means are also proposed for providing a vehicle with such kinds of information.

In the marker system using a magnetic marker, however, a marker having a magnetic field intensity that is strong enough not to be affected by a turbulence in the geomagnetism is essential. A strong magnetic field intensity could ill-affect peripheries. A task in this system is how to find out a good compromise. In the conventional marker systems using radio wave markers, where plural electric waves having different frequencies are transmitted time-sequentially to be detected respectively in the resonance reflection waves or an IC information tag is used, the drawbacks are that it requires a number of frequencies in the former concept, while in the latter concept requires many electronic components in a marker. In either of the concepts, the conventional marker systems make the whole structure, including the markers buried in the road surface, too complicated to be introduced in practical application.

The systems using a beacon or the like wireless communication device or an optical communication means can afford an increased amount of information. However, they need a gantry across a road for installing antenna if each of the lanes is to be provided with separate information respectively. This require a high installation cost. A lane-side antenna can be installed cheap, but the antenna has a broad service area as broad as some tens of meters, and it is difficult to specify the area to a certain specific region. So, information is delivered to a bulk area; or, it is difficult to provide a certain specific information for each of the respective lanes.

### SUMMARY OF THE INVENTION

A reflection multiplier radio wave marker comprising a first receive antenna of an approximate rod shape for receiving electric wave of a first frequency, a frequency conversion circuit connected to the first receive antenna for multiplying frequency of the electric wave received, a transmit antenna of an approximate disc shape for reflecting an electric wave multiplied by the frequency conversion circuit into a second frequency. The transmit antenna is disposed on a plane including the first receive antenna in parallel to the surface so that receiving electric wave and transmitting electric wave cross at right angle, and the transmit antenna is formed of a coil either one of two types, wound clockwise or anti-clockwise, so that the transmitting electric wave can be reversed in phase by approximately 180°. The first receive antenna, the transmit antenna and the frequency conversion circuit are housed in a case made of a nonmagnetic material.

### BRIEF DESCRIPTION OF THE DRAWINGS

FIG. 1 shows circuit structure of a reflection multiplier radio wave marker in accordance with a first exemplary embodiment of the present invention.

FIG. 2 is a chart used to describe the phase difference between the receive electric wave and the transmit electric wave of the marker in the embodiment 1.

FIG. 3 is an exploded perspective view of a reflection multiplier marker in the embodiment 1.

FIG. 4 is an exploded perspective view of a reflection multiplier marker in the embodiment 1.

FIG. 5 shows examples of alignment of reflection multiplier radio wave markers in the embodiment 1.

FIG. 6 is an exploded perspective view of a reflection multiplier marker in accordance with a second exemplary embodiment.

FIG. 7 is a block diagram used to show the receiving and transmitting of signals between a marker sensor and a marker, in accordance with a third exemplary embodiment.

FIG. 8 is a block diagram used to show the receiving and transmitting of signals between a marker sensor and a marker, in accordance with a fourth exemplary embodiment.

FIG. 9 shows an alignment of markers and signal derived from the alignment, in accordance with a fourth exemplary embodiment.

FIG. 10 is a block diagram used to show the receiving and transmitting of signals between a marker sensor and a marker, in accordance with a fifth exemplary embodiment.

FIG. 11 is a perspective view used to show a state how a vehicle is controlled in accordance with a sixth exemplary.

FIG. 12 is a perspective view used to show a state how a vehicle is controlled in accordance with a seventh exemplary embodiment.

FIG. 13 is a perspective view used to show a state how a vehicle is controlled in accordance with an eighth exemplary embodiment.

FIG. 14 is a perspective view used to show a state how a vehicle is controlled in accordance with a ninth exemplary embodiment.

FIG. 15 is a perspective view used to show a state how a vehicle is controlled in accordance with a tenth exemplary embodiment.

FIG. 16 is a perspective view used to show a state how a vehicle is controlled in accordance with an eleventh exemplary embodiment.

FIG. 17 is a perspective view used to show a state how a vehicle is controlled in accordance with a twelfth exemplary embodiment.

### DESCRIPTION OF THE PREFERRED EMBODIMENTS

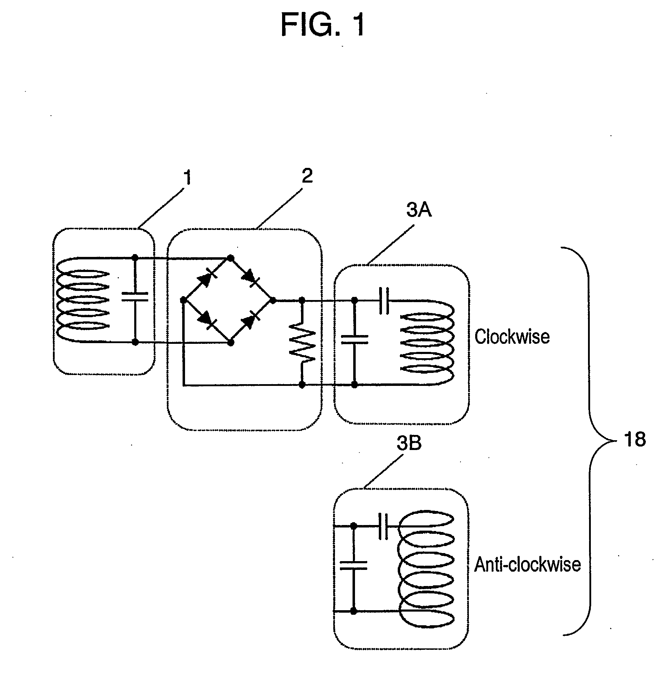

Preferred embodiments of the present invention are described in the following with reference to FIGs. 1 through 17.

### (Embodiment 1)

FIG. 1 shows the structure of a reflection multiplier radio wave marker (hereinafter referred to as marker) 18 in accordance with a first exemplary embodiment of the present invention.

A receive antenna portion 1 is a bar antenna which is formed of a cylindrical ferrite wound around with a coil. A frequency conversion circuit 2 is formed of a diode bridge, which converts first frequency of the electric wave received by the first receive antenna portion 1 into a second frequency. A transmit antenna portion 3A is formed of a loop coil disposed in a plane, which reflects/transmits the electric wave converted into a second frequency by the frequency conversion circuit 2.

Thus the marker 18 can reflect an electric wave received by the marker 18 in a first frequency as a different electric wave having a second frequency. A transmit antenna portion 3B is formed of a loop antenna wound in a direction reverse to that of the transmit antenna portion 3A. A marker is assembled by selecting either one type of the loop antennas, winding direction 3A or 3B, in the transmit antenna portion.

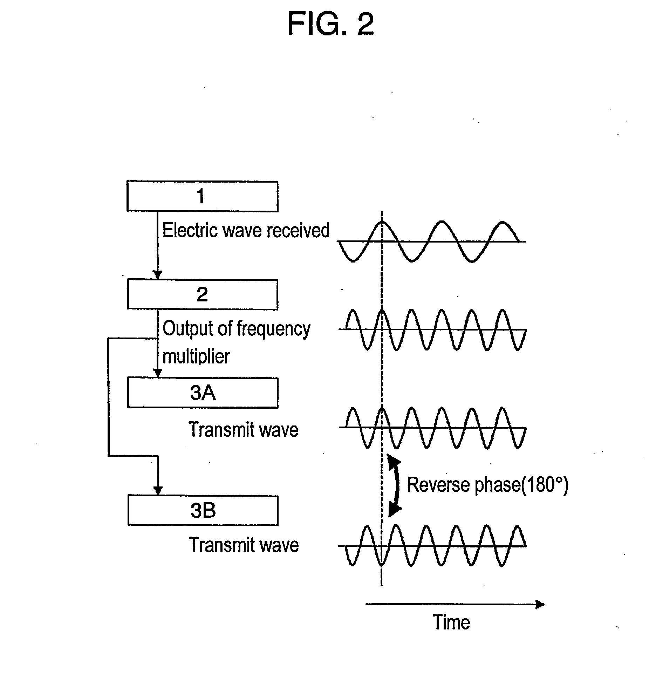

FIG. 2 shows the wave form of electric waves, received and reflected/transmitted by the marker 18. Names of the relevant constituent components are given in the left, while the wave forms therefrom are shown in the right. An electric wave received by first receive antenna 1 is converted at the frequency conversion circuit 2 into a signal having two-fold frequency. Phase of the output signal reverses 180°, depending on whether the transmit antenna 3A has the clockwise winding or the anti-clockwise winding. Since a transmit electric wave and a receive electric wave are synchronized, whether a phase of transmit electric wave is positive or negative can be discriminated by comparing it with that of receive signal.

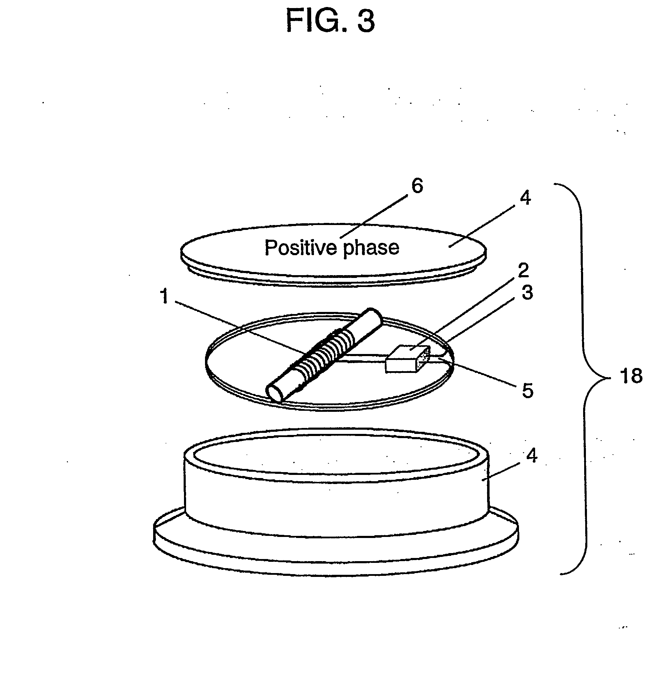

FIG. 3 shows the structure of a marker 18 in accordance with a first exemplary embodiment of the present invention, with which the up-down direction for installation being fixed.

The first receive antenna portion 1 is connected to the frequency conversion circuit 2, and then to the transmit antenna portion 3 via a connecting portion 5. All these are housed in a case 4 having a base for installation provided at the bottom. The installation base shown in the drawing is just exemplary; it is illustrated just as an example of installation means, it can be a screw hole for fixing, a tapered section for anti-withdrawal, etc.

Although FIG. 3 shows the case 4 being split into a main body and a lid, the case can be integrally formed as a single body. The drawing is not intended to specify the structure of case.

A phase indication 6 is carved on the surface of marker 18 in the drawing. It may be printed instead with a pen or by attaching a seal; the illustration is not intended to specify means of indication. Although the indication is given by a term, "Positive phase", it may be given by using a symbol or a mark; furthermore, a place of the phase indication is not limited to the top surface, it may be given at a side or at any other appropriate places.

Or, the phase indication can be given with a specific shape that is recognizable from outside; any means would do in so far as it clearly gives a phase indication.

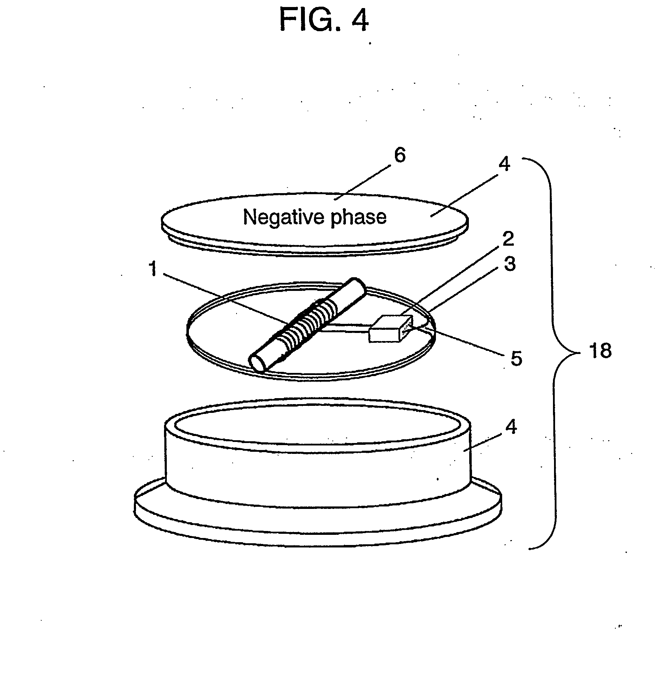

FIG. 4 shows the structure of a marker 18 in a first exemplary embodiment. The marker 18 of FIG. 4 is different from that in FIG. 3 in that the connecting portion 5 connects the frequency conversion circuit 2 and the transmit antenna portion 3 just opposite. Consequently, the reflected transmit wave has an opposite phase.

When a marker 18 of FIG. 3 and a marker 18 of FIG. 4 are aligned alternately, a combination of positive and negative phases can be created. So, a certain specific aligning of the markers can generate specific information, for example, information for designating a specific place, information for discriminating lanes, and for various other purposes.

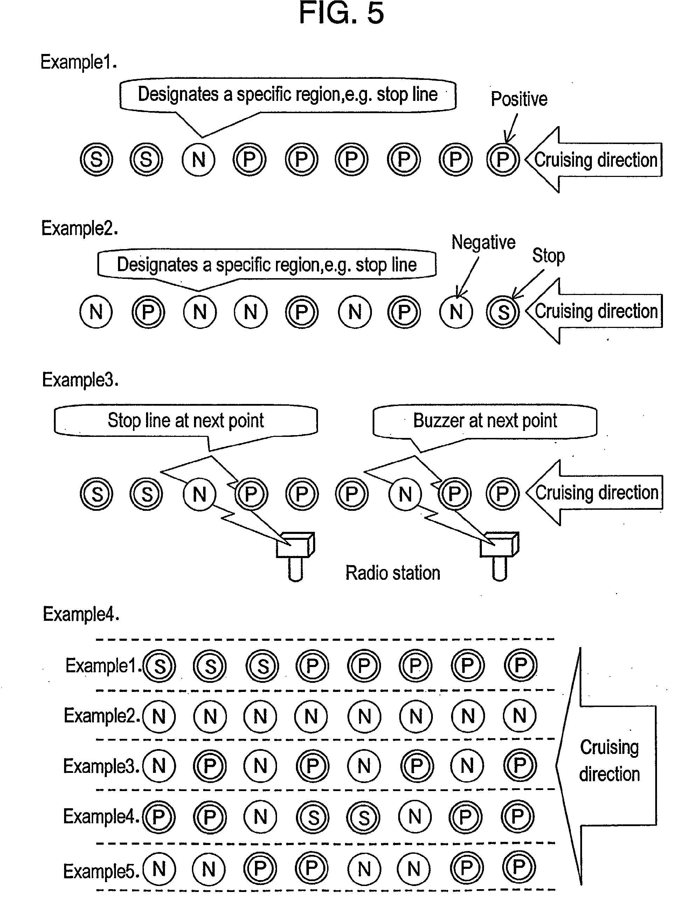

FIG. 5 shows some of the examples of aligning two types of markers 18 having different phases.

Example 1 shows a negative phase maker disposed in a line of positive phase markers. The negative phase marker designates start of a certain specific region, e.g. a place for turning headlamps on.

Example 2 shows a line of the positive phase markers and the negative phase markers disposed alternately one after the other, in which two or more number of the same-phased markers disposed successively in the line designate a place of certain specific meaning.

The above-described kind of marker alignment can provide a single message of simple content such as a stop line. However, in a case where plural contents such as stop line and slow down area are to be provided, the contents need to be selected properly.

Example 3 shows a system for sending message contents. In the present exemplary system, contents at a certain specific place are communicated through a beacon or a radio station, while information about the specific places is provided by the alignment of markers. A combination of these functions makes it possible to offer plural message contents.

Example 4 shows lines of aligned markers, each line having own aligning pattern. A vehicle can identify the line it is tracing; if the pattern is the regular repetition of P · N · P · N phases, it learns that it is tracing the third line locating in the middle.

### (Embodiment 2)

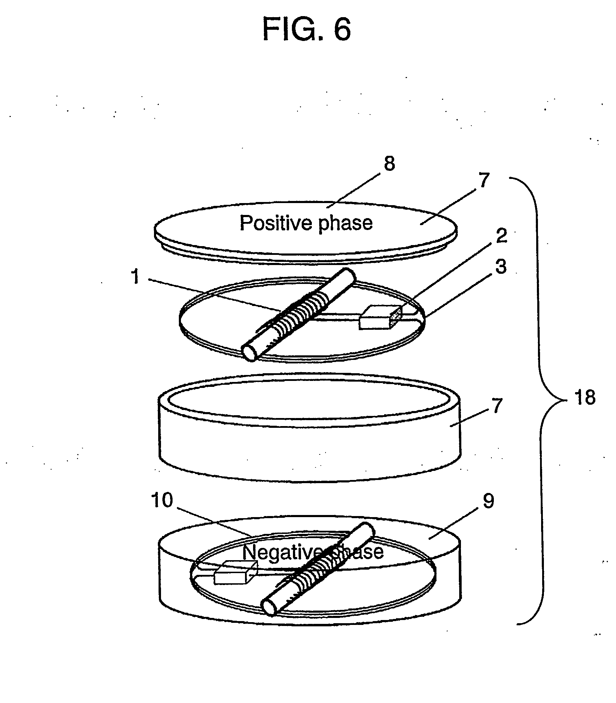

FIG. 6 shows the structure of a marker 18 in accordance with a second exemplary embodiment of the present invention. A first receive antenna portion 1 is connected to the frequency conversion circuit 2, and then to a transmit antenna portion 3. All these are housed in a case 7 and sealed. The case 7 can be installed in a road in either way, on the bottom or on the top. Although the case is illustrated to have been formed of a main body and a lid, it can be formed as a single integrated body. The illustration is not intended to designate the structure of the case.

Although the illustration of marker 18 provides the lid at the top and the main body at the bottom, it is not intended to designate a posture for installation. An indication 8 given on the top surface is to show the phase type of reflected transmit wave.

An indication 10 given on the bottom surface 9 is to show the phase of the reflected transmit wave when the marker is installed with the bottom surface up. These indications are carved on the respective surfaces of a marker. However, they may be marked instead with a pen or by means of a seal attached thereon; the illustration is not intended to designate means of indication. Although the indications are given in the terms, "Positive phase", "Negative phase", these may be provided by using symbols or marks; furthermore, the places of providing indication are not limited to the top or the bottom of markers; it may be given at a side by means of an arrow mark, or at any other places in so far as it indicates the phase of transmit wave when the marker is installed with the indicated surface up. Or, the phase indication can be provided by means of a differentiated external shape; any means would do in so far as it gives a phase indication properly.

As seen in FIG. 6, when a marker 18 is installed upside down by revolving it by 180° around the axis of first receive antenna, the wound direction of the transmit antenna is reversed while that of the first receive antenna remains unchanged.

The reflected transmit wave can have a desired phase type, depending on whether a marker is installed on the bottom or on the top. Thus, the markers 18 of above-configured structure do not need to be provided by respective phase types. The same markers 18 can be used for the positive phase or the negative phase by reversing the posture of installation on the spot.

### (Embodiment 3)

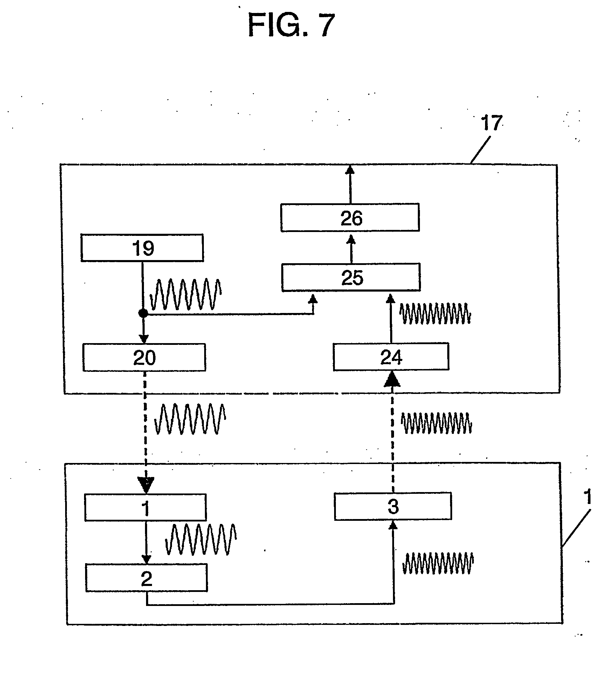

FIG. 7 shows the structure and the operation of a marker sensor 17 in accordance with a third exemplary embodiment of the present invention.

The marker sensor 17 is formed of an oscillation circuit 19 for oscillating transmit electric wave, a transmit antenna 20 for transmitting the output from oscillation circuit 19, a second receive antenna 24 for receiving electric wave transmitted from a marker 18, a phase detector 25 and a phase type output portion 26.

The phase detector 25 discriminates whether a receive signal is positive-phased or negative-phased, after comparing the phase of transmit signal delivered from oscillation circuit 19 with that of signal received by the second receive antenna 24. The phase type output portion 26 delivers the phase type discriminated at the phase detector 25 to an external apparatus.

The marker 18 is formed of a first receive antenna 1, a frequency conversion circuit 2 for multiplying the frequency of electric wave received by the first receive antenna 1 two-fold, and a transmit antenna 3 for transmitting the electric wave.

### (Embodiment 4)

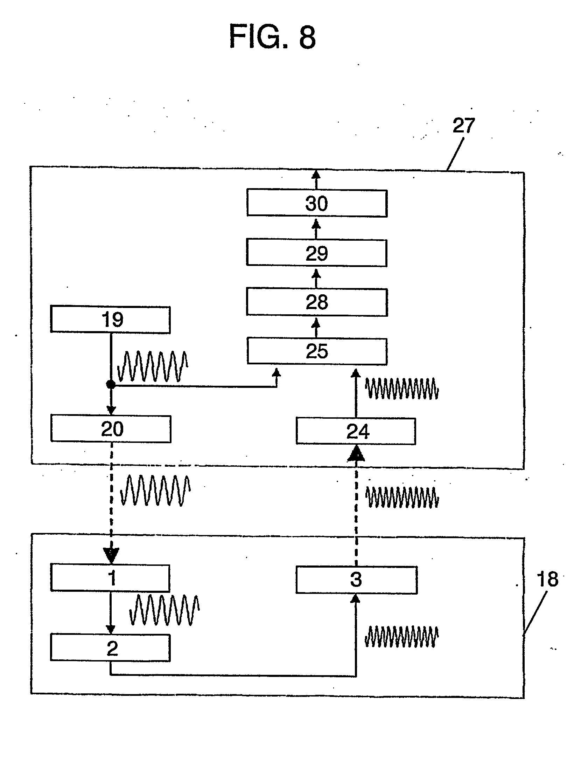

FIG. 8 shows the structure and the operation of a marker sensor 27 in accordance with a fourth exemplary embodiment of the present invention. A marker 18 is also included in the illustration for the sake of completing a description. The point of difference as compared with FIG. 7 is that the marker detector 27 has a different signal processing circuit after the phase detector 25, at which the phase of transmit signal delivered from the oscillation circuit 19 and that of the signal received by the second receive antenna 24 are compared.

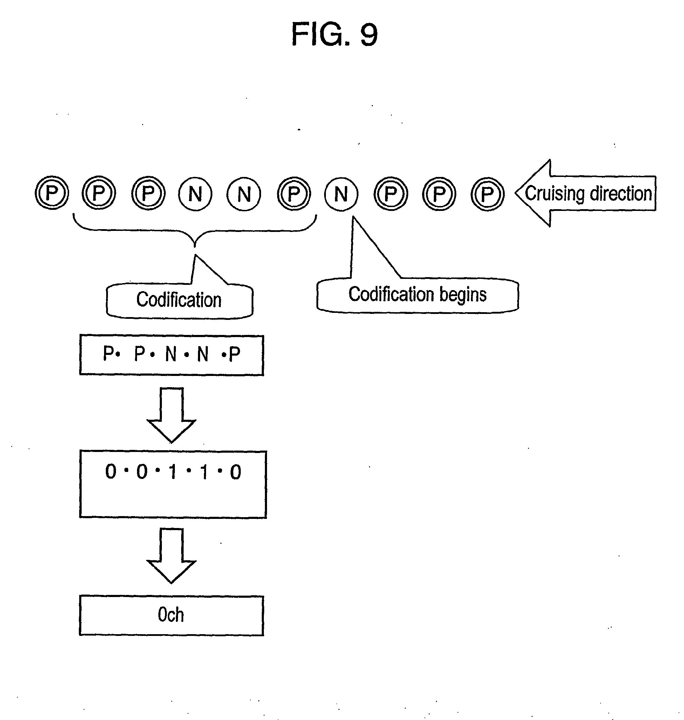

The signal of phase detector 25 for discriminating the receive signal, whether it is positive-phased or negative-phased, is delivered to a phase history storage 28. The results of phase detection from plural markers 18 are stored in the phase history storage 28. The output of phase history storage 28 is delivered to a codification section 29 for coding. Among a number of process of coding, an example is shown in FIG. 9. Here, in a line of continual positive phase markers, a series of positive phase markers and negative phase markers is inserted to exhibit a codification, following a negative phase marker placed just before the codification line. The codification line in this example of FIG. 9 is formed of five markers. After a negative phase marker placed for notifying the start of codification, markers are arranged in the order from the higher level, [Positive · Negative · Negative · Positive · Positive]. Replacing the Positive with [0] and the Negative with [1], it turns into [0 · 1 · 1 · 0 · 0], which is identical to [0C] in the hexadecimal system. Thus a codification can be provided by an alignment of two types of phases.

Also, as the Example 4 of FIG. 5 shows, line types can be discriminated through recognition of a repeated phase pattern in a marker line.

### (Embodiment 5)

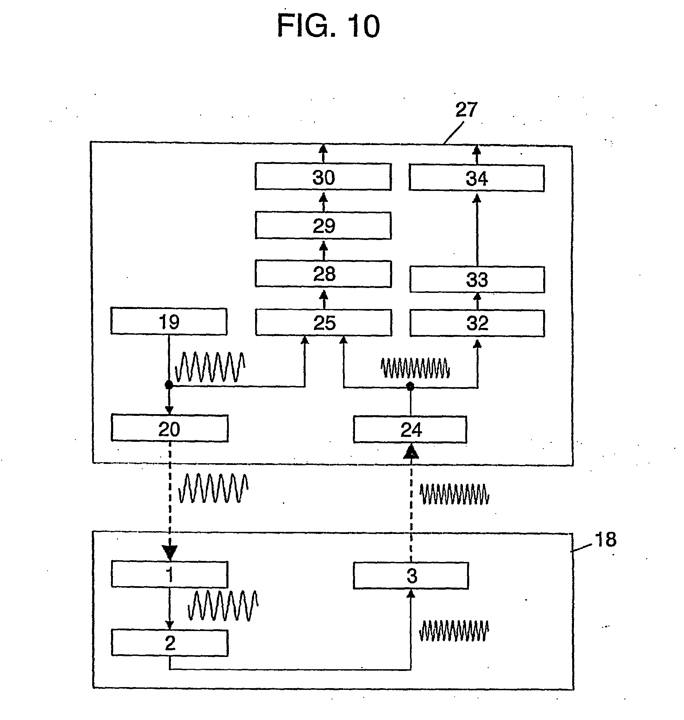

FIG. 10 shows the structure and the operation of a marker sensor 27 in accordance with a fifth exemplary embodiment of the present invention.

The point of difference as compared with the embodiment 4 of FIG. 8 is that the marker detector 27 has a location detector 32 and a location output section 34.

A plurality of second receive antennas 24 is disposed on a transversal line. A receive antenna 24 locating closer to a marker 18 receives electric wave which is stronger than that received by a second receive antenna 24 which is locating far from the marker 18. So, relative location with respect to a marker 18 can be made available by comparing the intensity of receive signals delivered from the plural receive points. The location detector 32 compares intensity of electric waves which is stemming from a marker 18 and received by the plural second receive antennas 24 disposed on a transversal line. Thus the location of marker detector 27 relative to a marker 18 is calculated.

Output from the location detector 32 is delivered to a location calculating portion 33, and then to the outside via the location output section 34.

Under the above-described configuration, a location relative to a marker 18 can be detected; at the same time, certain specific places, codification, type of lines, etc. can be discriminated by means of the phase detection.

### (Embodiment 6)

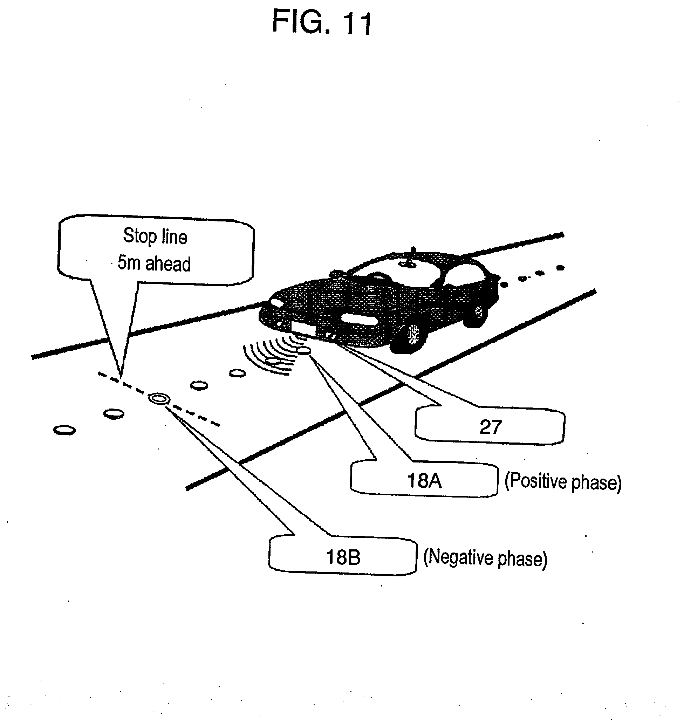

FIG. 11 shows a system of reflection multiplier radio wave markers applied to a road traffic, in accordance with a sixth exemplary embodiment of the present invention. Markers 18 are installed in the road surface along a line running at the center of a traffic lane. In the present example, positive phase markers 18A are disposed at a regular interval, and a marker 18B of negative phase is placed at a certain location for generating information of a certain specific message. Here, the negative phase marker 18B signifies that there is a stop line 5 meters ahead. Vehicles having a marker sensor 27 on board already know that the negative phase marker 18B indicates that there is a stop line 5 meters ahead. A vehicles having a marker sensor 27 keeps detecting the markers 18 to confirm that they are positive-phased during normal cruising. As soon as the vehicle passes over a negative phase marker 18B, it is notified in accordance with the results of phase type discrimination that it just passed above the negative phase marker 18B, or there is a stop line 5 meters ahead. Thus, a vehicle, or the driver, can use the system for controlling, or driving, the vehicle.

### (Embodiment 7)

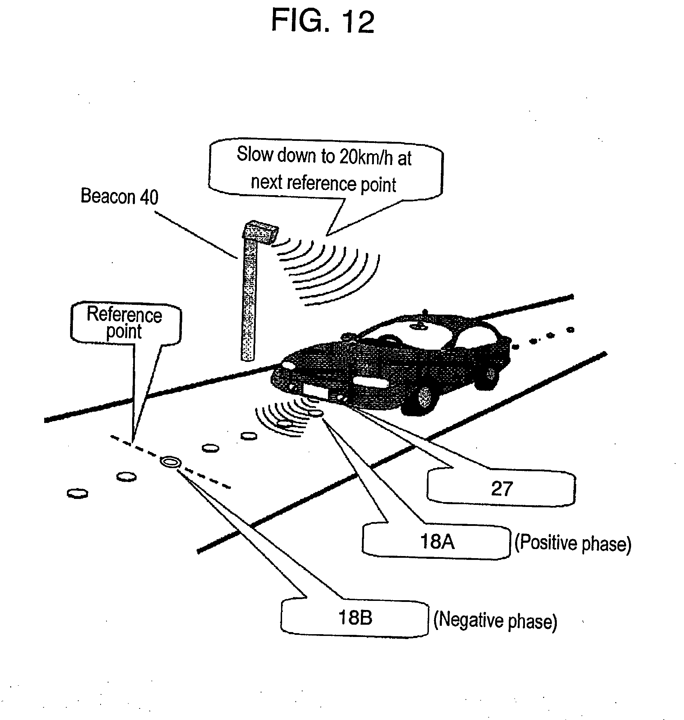

FIG. 12 shows a system of reflection multiplier radio wave markers applied to a road traffic, in accordance with a seventh exemplary embodiment of the present invention. There is a beacon 40 installed at a road side as an example of message communication means. Vehicles have a receiver for processing a message delivered from the beacon 40. The beacon 40 is generating a message, saying "Slow-down to 20 km/h at the next reference point", a vehicle recognizes the message. As soon as the vehicle passes over the reference point indicated by a negative phase marker 18B, it is notified by an output from a marker sensor 27 about the passing over the reference point. By combining these message and information, the vehicle slows down the cruising speed to 20 km/h at the specific point. Message delivered from the beacon 40 may be varied to most useful ones depending on circumstances; it can be a traffic jam information, a weather report, for example.

### (Embodiment 8)

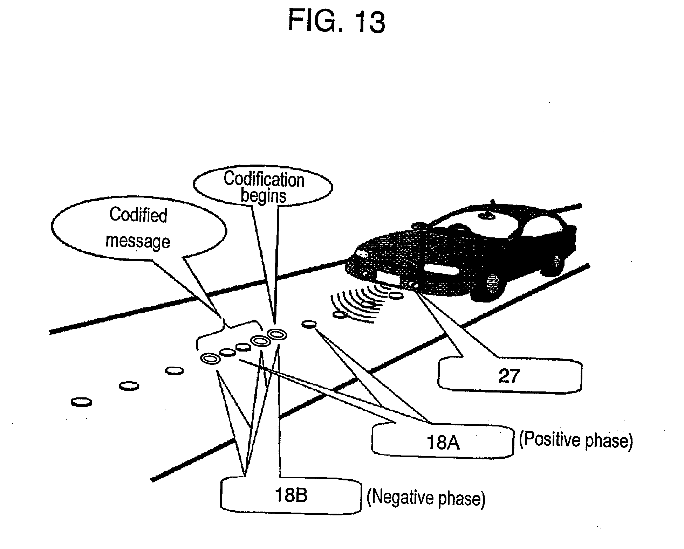

FIG. 13 shows a system of reflection multiplier radio wave markers applied to a road traffic, in accordance with an eighth exemplary embodiment of the present invention. Markers 18 are installed in the road surface along a line running at the center of a traffic lane. In the present example, positive phase markers 18A are disposed at a regular interval, and a series of negative phase markers 18B and positive phase markers 18A combined for codification is disposed after a marker 18B of negative phase. Here, four markers 18 disposed in the order of Negative Positive · Positive · Negative phases signify a speed limit 60 km/h. Vehicles having a marker sensor 27 on board already know that the four markers 18 disposed in the order of Negative · Positive · Positive · Negative phases signify a speed limit 60 km/h. Vehicles having a marker sensor 27 keep detecting the markers 18 to confirm that they are positive-phased during the normal cruising. As soon as a vehicle passes over a negative phase marker 18B, it is notified about the start of codification and starts accumulating the codes. From the result of accumulated codes, it understands that the four markers 18 coming after a negative phase marker 18B are having Negative · Positive · Positive · Negative phases, respectively; namely, it recognizes a speed limit 60 km/h. Thereby, it can slow down the speed in advance before reaching a curve, for example. Thus, a vehicle, or the driver, can use the system for controlling, or driving, a vehicle in favor of traffic safety.

Although the above description has been based on the positive phase markers 18A installed normally, such markers are not indispensable. Installing the markers in a codification region alone also generates the same effects as well.

### (Embodiment 9)

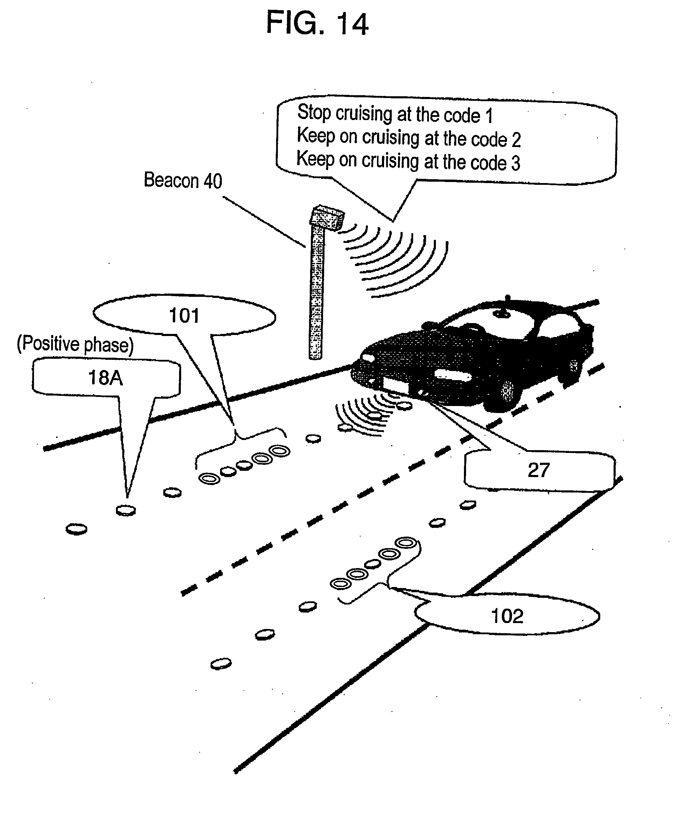

FIG. 14 shows a system of reflection multiplier radio wave markers applied to a road traffic, in accordance with a ninth exemplary embodiment of the present invention. There is a beacon 40 installed at a road side as an example of message communication means. Vehicles have a receiver for processing message delivered from the beacon 40. The beacon 40 is generating a message, saying "Stop cruising at the code 101. Keep on cruising at the code 102", a vehicle recognizes the message. In the present example, the code 101 is installed in a passing lane while the code 102 in the normal cruising lane.

As soon as a vehicle passes over a series of codification which begins with a negative phase marker 18B, the vehicle recognizes the code; in the present example, it detects the code 101 installed in passing lane. By a combination of these information, a message can reach a certain targeted vehicle.

Message from the beacon 40 may be varied to most effective ones depending on circumstances; it can be a traffic jam information, a weather report, for example. Thus the system can be used for various applications.

### (Embodiment 10)

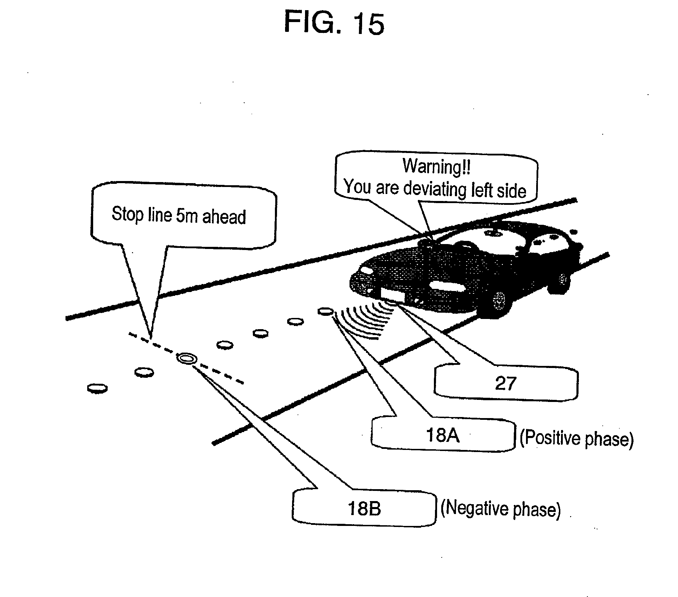

FIG. 15 shows a system of reflection multiplier radio wave markers applied to a road traffic, in accordance with a tenth exemplary embodiment of the present invention. Markers 18 are installed in the road surface along a line running at the center of a traffic lane. In the present example, positive phase markers 18A are disposed at a regular interval, and a negative phase marker 18B is disposed at a certain specific message point. Here, a negative phase marker 18B signifies that there is a stop line 5 meters ahead. Vehicles having a marker sensor 27 on board already know that a negative phase marker 18B indicates a stop line 5 meters ahead.

Vehicles having a marker sensor 27 keep detecting the markers 18 to confirm that these are positive-phased during normal cruising. As soon as a vehicle passes over a negative phase marker 18B, it is notified in accordance with the results of phase type discrimination that it just passed above the negative phase marker 18B, or there is a stop line 5 meters ahead. Thus the system can be used for a vehicle, or the driver, to control the cruising.

A marker sensor 27 comprises a plurality of receive antennas 24 disposed on a line along the vehicle width. A second receive antenna 24 locating closer to a marker 18 receives the electric wave at a higher intensity. So, the relative right-left location with respect to the marker 18 can be detected by comparing intensity of the signals received by the plurality of second receive antennas 24. The plurality of second receive antennas 24 are mounted fixed on a vehicle, and the markers 18 are installed at the center of a traffic lane. Therefore, amount of deviation of a vehicle from the center of a lane can be detected.

Thus, the system makes it possible for a vehicle to detect both a location within a traffic lane, and to receive a certain specific message.

### (Embodiment 11)

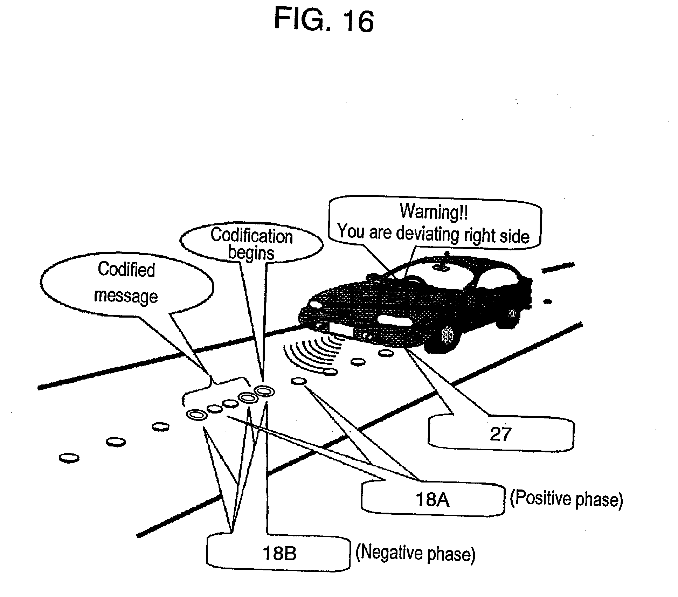

FIG. 16 shows a system of reflection multiplier radio wave markers applied to a road traffic, in accordance with an eleventh exemplary embodiment of the present invention. Markers 18 are installed in the road surface along a line running at the center of a traffic lane. In the present example, positive phase markers 18A are disposed at a regular interval, and a series of negative phase markers 18B and positive phase markers 18A combined for codification is disposed after a marker 18B of negative phase, which is installed at a location of message point. Here, four markers 18 disposed in the order of Negative · Positive · Positive · Negative phases signify a speed limit 60 km/h. Vehicles having a marker sensor 27 on board already know that the four markers 18 disposed in the order of Negative · Positive Positive · Negative phases signify a speed limit 60 km/h. Vehicles having a marker sensor 27 keep detecting the markers 18 to confirm that these are positive-phased during normal cruising. As soon as a vehicle passes over a negative phase marker 18B, it is notified about the start of codification and starts accumulating the codes. From the result of accumulated codes, it understands that the four markers 18 coming after a negative phase marker 18B are having Negative · Positive ·Positive ·Negative phases, respectively; namely, it recognizes a speed limit 60 km/h. Thereby, it can slow the cruising speed down in advance before reaching a curve, for example. Thus the system can be used for a vehicle, or the driver, to control the cruising in favor of traffic safety.

A marker sensor 27 comprises a plurality of second receive antennas 24 disposed on a line along the vehicle width. A second receive antenna 24 locating closer to a marker 18 receives the electric wave at a higher intensity. So, the relative right-left location with respect to the marker 18 can be detected by comparing intensity of signals received by the plurality of second receive antennas 24. The plurality of second receive antennas 24 are mounted fixed on a vehicle, and the markers 18 are installed at the center of a lane. Therefore, an amount how far a vehicle is deviating from the center of a traffic lane can be detected.

Thus, the system makes it possible for a vehicle to detect both a location within a traffic lane, and to receive a certain specific message.

For promoting an anti-head on collision campaign, it may be effective to introduce a system that prevents a vehicle from making a deviation out of a traffic lane. Such system is expected warn a driver before a vehicle is going to deviate from a lane, or in a more advanced version, it automatically steers a vehicle back to the lane. An amount how far it is deviating from the center of a lane can be detected through the function of location detection. However, the amount of allowance before a vehicle actually getting out of a lane depends on the width of a lane. There is a greater allowable sidewise deviation in a lane having a broader width. The allowance is dependent also on such environmental factors as the road curvature, the wet or dry of surface conditions, etc. Even in a same road, width of a lane may vary from place to place. Under such practical environments, the present invention can provide both an affordable sidewise deviation and an actual amount of the deviation through a combination of codified information and location detection. Thus the present invention can implement a reliable anti-deviation traffic system; in which there will be no such drawbacks as generating a too-early warning despite substantial allowances left, or issuing a warning too-late in a road of narrow width having least allowance.

### (Embodiment 12)

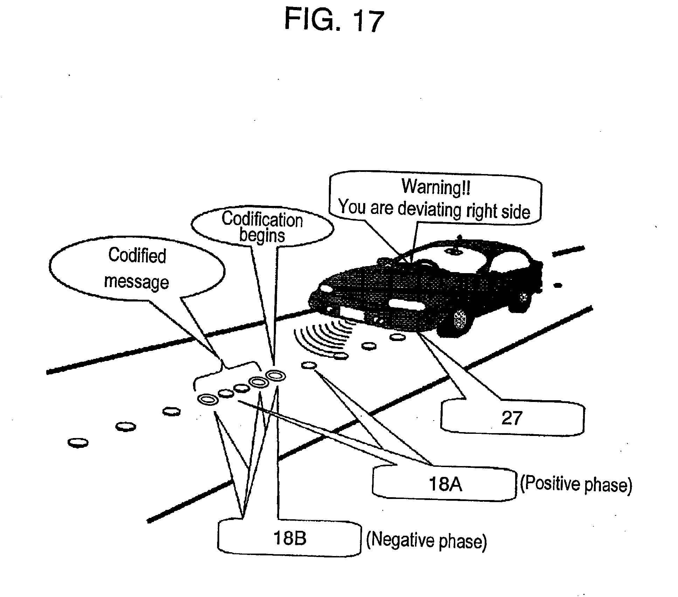

FIG. 17 shows an application example of the present invention, in accordance with a twelfth embodiment. What is longed for is a traffic lane along which a vehicle is automatically steered to be within a certain allowance range, thereby the burden of drivers is alleviated. In order to retain a cruising vehicle within a certain range of a traffic lane, it is essential for an appropriate steering and speeding to detect not only the amount of sidewise deviation but also the surface conditions, wet or dry, relevant to the tire slid, the curve radius, inclination, etc. of a road. For example, when a road is wet and slippery the allowable amount of skid needs to be controlled to be small for enabling earlier steering; in a sharp curve, the allowable sidewise deviation needs to be controlled to be greater towards the inside and smaller towards the outside.

The present invention makes it possible for a vehicle to detect an amount of deviation from the center of a lane through the function of location detection, and information regarding the surface conditions as well as curvature of a road is provided a combination of codification and beacon. The integration of these kinds of information ensures a reliable maintenance to a road.

Also longed for is a fully automated driving service, with which a vehicle can cruise at the absence of a driver, or at a substantially reduced load on a driver. In this case, more information about the overall driving environments and means for controlling a vehicle based on the information are required, in addition to the earlier information needed for the anti-deviation or the lane maintenance.

Just for example, the cruising speed needs to be controlled during a downhill by an appropriate brake operation, the speed needs to be sufficiently slowed down before a sharp turn, in shifting a cruising lane to another the status of adjacent lanes needs to be watched in advance. At an interchange where a vehicle is requested to select a lane in accordance with the destination, recognition of the presently cruising lane and understanding on how to switch to other lane become an essential procedure.

The present invention makes it possible to detect location of a vehicle in a lane using the marker 18 and the marker sensor 27, to provide information about the road surface conditions, shape of the road, category of the lane, number of lanes, etc. through a combination of the codification and the beacon 40. The automatic control of cruising vehicles may be implemented through the integration of these information.

A more practical example of the traffic before an interchange; markers installed are offering messages in code, telling that "There are 3 lanes, lane of code 101 turns right for Nagoya, lane of code 102 goes straight for Kyoto, lane of code 103 turns left for Kobe". A cruising vehicle receives the message through a combined services of a beacon 40 and a codification provided in the surface of the road. The vehicle gets information as to whether or not the presently cruising lane is appropriate for a destination, how many lane shifts have to be conducted, etc., to continue the cruising for its destination.

As described in the foregoing, the present invention provides the markers 18 with the Positive or the Negative phase, and makes it possible to provide a certain information specific to a certain place and a certain codified information using a plurality of the markers disposed in a certain specific alignment.

The marker sensor 27 can discriminate the phase, Positive or Negative, of a marker, which enables the sensor to detect the location of a vehicle in the width direction and to collect various cruising information.

Those information provided in the surface of a road are picked up to be conveyed to a vehicle, or the driver. They are used for driving, or control of a vehicle.

A combined use of a beacon 40 or the like instantaneous communication means enables to provide information in details in the form of codification and to pick up the contents contained therein. Thereby, information of higher complication can be offered to a vehicle, and the vehicle can make use of it for the control of a higher sophistication level.

## Claims

1. A reflection multiplier radio wave marker comprising:
a first receive antenna of an approximate rod shape for receiving electric wave of first frequency;
a frequency conversion circuit connected to said first receive antenna for multiplying the frequency of received signal; and
a transmit antenna of an approximate disc shape for reflecting the electric wave which has been multiplied to a second frequency by said frequency conversion
circuit, wherein
said transmit antenna is disposed on and in parallel to a plane containing said first receive antenna so that receiving electric wave and transmitting electric wave cross at right angle,
said transmit antenna is formed of a coil either one of two types, wound clockwise or anti-clockwise, so that the transmit electric wave can be reversed in phase by approximately 180°, and
said first receive antenna, said transmit antenna and said frequency conversion circuit are housed in a case made of a nonmagnetic material.

2. A reflection multiplier radio wave marker comprising:
a first receive antenna of an approximate rod shape for receiving electric wave of first frequency;
a frequency conversion circuit connected to said first receive antenna for multiplying the frequency of received signal; and
a transmit antenna of an approximate disc shape for reflecting the electric wave which has been multiplied to a second frequency by said frequency conversion circuit, wherein,
said transmit antenna is disposed on and in parallel to a plane containing said first receive antenna so that receiving electric wave and transmitting electric wave cross at right angle,
said transmit antenna is formed of either one of said two types of coils disposed in a posture up/down reversed so that the transmit electric wave can be reversed in phase by approximately 180°, and
said first receive antenna, said transmit antenna and said frequency conversion circuit are housed in a case made of a nonmagnetic material.

3. A marker sensor comprising:
a second receive antenna for receiving electric waves transmitted from a plurality of reflection multiplier radio wave markers, which electric waves being transmitted in phases different by approximately 180° to each other; and
a phase detector for detecting the phase, positive or negative, of electric wave received by said second receive antenna.

4. The marker sensor of claim 3 further comprising:
a phase history storage portion for storing phase history of electric waves received from said plurality of reflection multiplier radio wave markers;
a codification section for generating code information based on phase history stored in said phase history storage portion; and
a code output section which outputs code information generated at said codification section.

5. A system of reflection multiplier radio wave markers comprising:
a reflection multiplier radio wave marker, which comprises
a first receive antenna of an approximate rod shape for receiving electric wave of first frequency;
a frequency conversion circuit connected to said first receive antenna for multiplying the frequency of received signal; and
a transmit antenna of an approximate disc shape for reflecting the electric wave, which has been multiplied to a second frequency by said frequency conversion circuit, wherein
said transmit antenna is disposed on and in parallel to a plane containing said first receive antenna so that receiving electric wave and transmitting electric wave cross at right angle,
said transmit antenna has a coil either one of two types, wound clockwise or anti-clockwise, so that the transmit electric wave can be reversed in phase by approximately 180°, and
said first receive antenna, said transmit antenna and said frequency conversion circuit are housed in a case made of a nonmagnetic material; and
a marker sensor including:
a second receive antenna for receiving electric waves transmitted from a plurality of reflection multiplier radio wave markers, which electric waves being transmitted in phases different by approximately 180° to each other; and
a phase detector for detecting the phase, positive or negative, of electric wave received by said second receive antenna.

6. A system of reflection multiplier radio wave markers comprising:
a reflection multiplier radio wave marker including:
a first receive antenna of an approximate rod shape for receiving electric wave of first frequency;
a frequency conversion circuit connected to said first receive antenna for multiplying the frequency of received signal; and
a transmit antenna of an approximate disc shape for reflecting the electric wave, which has been multiplied to a second frequency by said frequency conversion circuit, wherein
said transmit antenna is disposed on and in parallel to a plane containing said first receive antenna so that receiving electric wave and transmitting electric wave cross at right angle,
said transmit antenna is formed of either one of said two types of coils disposed in a posture up/down reversed so that the transmit electric wave can be reversed in phase by approximately 180°, and
said first receive antenna, said transmit antenna and said frequency conversion circuit are housed in a case made of a nonmagnetic material; and
a marker sensor including:
a second receive antenna for receiving electric waves transmitted from a plurality of reflection multiplier radio wave markers, which electric wave being transmitted in phases different by approximately 180° to each other; and
a phase detector for detecting the phase, positive or negative, of electric wave received by said second receive antenna.

7. The system of reflection multiplier radio wave markers recited in claim 5 or claim 6, further comprising:
a phase type output section which outputs information about the phase type based on phase difference detected at said phase detector;
a location detector which calculates relative location with respect to said reflection multiplier radio wave marker by comparing the intensity of electric waves coming from said reflection multiplier radio wave markers received by said plurality of second receive antennas; and
a location output section which outputs the location information generated at said location detector.

8. The system of reflection multiplier radio wave markers recited in claim 5 or claim 6, further comprising:
a phase history storage portion for storing phase history of electric waves received from said plurality of reflection multiplier radio wave markers;
a codification section for generating code information based on phase history stored in said phase history storage portion; and
a code output section which outputs code information generated at said codification section.

9. A traffic system comprising:
a system of reflection multiplier radio wave markers including:
a reflection multiplier radio wave marker, which comprises
a first receive antenna of an approximate rod shape for receiving electric wave of first frequency,
a frequency conversion circuit connected to said first receive antenna for multiplying the frequency of received signal, and
a transmit antenna of an approximate disc shape for reflecting the electric wave which has been multiplied to a second frequency by said frequency conversion circuit, wherein
said transmit antenna is disposed on and in parallel to a plane containing said first receive antenna so that receiving electric wave and transmitting electric wave cross at right angle,
said transmit antenna has a coil either one of two types, wound clockwise or anti-clockwise, so that the transmit electric wave can be reversed in phase by approximately 180°, and
said first receive antenna, said transmit antenna and said frequency conversion circuit are housed in a case made of a nonmagnetic material; and
a marker sensor, which comprises
a second receive antenna for receiving electric waves transmitted from a plurality of reflection multiplier radio wave markers, which electric wave being transmitted in phases different by approximately 180° to each other,
a phase detector for detecting the phase, positive or negative, of electric wave received by said second receive antenna, and
a phase type output section which outputs information about phase type based on the phase difference detected at said phase detector.

10. A traffic system comprising:
a system of reflection multiplier radio wave markers including:
a reflection multiplier radio wave marker, which comprises
a first receive antenna of an approximate rod shape for receiving electric wave of first frequency,
a frequency conversion circuit connected to said first receive antenna for multiplying the frequency of received signal, and
a transmit antenna of an approximate disc shape for reflecting the electric wave which has been multiplied to a second frequency by said frequency conversion circuit, wherein
said transmit antenna is disposed on and in parallel to a plane containing said first receive antenna so that receiving electric wave and transmitting electric wave cross at right angle,
said transmit antenna is formed of either one of said two types of coils disposed in a posture up/down reversed so that the transmit electric wave can be reversed in phase by approximately 180°, and
said first receive antenna, said transmit antenna and said frequency conversion circuit are housed in a case made of a nonmagnetic material; and
a marker sensor, which comprises
a second receive antenna for receiving electric waves transmitted from a plurality of reflection multiplier radio wave markers, which electric wave being transmitted in phases different by approximately 180° to each other,
a phase detector for detecting the phase, positive or negative, of electric wave received by said second receive antenna, and
a phase type output section which outputs information about phase type based on the phase difference detected at said phase detector.

11. The traffic system of claim 9, wherein
cruising of a vehicle is controlled, or the driver is provided with information, based on information provided by said system of reflection multiplier radio wave markers.

12. The traffic system of claim 10, wherein
cruising of a vehicle is controlled, or the driver is provided with information, based on information provided by said system of reflection multiplier radio wave markers.

13. The traffic system of claim 9, wherein
said vehicle is provided with information about cruising status based on information provided by said system of reflection multiplier radio wave markers.

14. The traffic system of claim 10, wherein
said vehicle is provided with information about cruising status based on information provided by said system of reflection multiplier radio wave markers.

15. The traffic system of claim 9, wherein
said vehicle is provided with information about cruising status and is controlled not to deviate from a traffic lane, based on information provided by said system of reflection multiplier radio wave markers.

16. The traffic system of claim 10, wherein
said vehicle is provided with information about cruising status and is controlled not to deviate from a traffic lane, based on information provided by said system of reflection multiplier radio wave markers.

17. The traffic system of claim 9, wherein
a vehicle is controlled to maintain a traffic lane based on location information provided by said reflection multiplier radio wave marker, which information has been specified by information provided by said system of reflection multiplier radio wave markers.

18. The traffic system of claim 10, wherein
a vehicle is controlled to maintain a traffic lane based on location information provided by said reflection multiplier radio wave marker, which information has been specified by information provided by said system of reflection multiplier radio wave markers.

19. The traffic system of claim 9, wherein
a vehicle can make an automatic cruising based on information provided by said system of reflection multiplier radio wave markers.

20. The traffic system of claim 10, wherein
a vehicle can make an automatic cruising based on information provided by said system of reflection multiplier radio wave markers.
